(19)

Europäisches
Patentamt
European
Patent Office
Office européen
des brevets

(11) **EP 1 798 542 A1**

(12) **EUROPEAN PATENT APPLICATION**

(43) Date of publication:
**20.06.2007 Bulletin 2007/25**

(51) Int Cl.:
*G01N 21/64* (2006.01)   *G01N 21/27* (2006.01)

(21) Application number: **05112358.6**

(22) Date of filing: **19.12.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicants:
• **Roche Diagnostics GmbH**
  **68305 Mannheim (DE)**
  Designated Contracting States:
  **DE**
• **F. Hoffmann-la Roche AG**
  **4070 Basle (CH)**
  Designated Contracting States:
  **AT BE BG CH CY CZ DK EE ES FI FR GB GR HU IE IS IT LI LT LU LV MC NL PL PT RO SE SI SK TR**

(72) Inventor: **Knobel, Rolf**
**6343 Rotkreuz (CH)**

(74) Representative: **Knauer, Martin et al**
**Roche Diagnostics GmbH**
**Patentabteilung**
**Sandhofer Strasse 116**
**68305 Mannheim (DE)**

(54) **Analytical method and instrument**

(57)     Subject of the invention is an analytical instrument comprising a computing unit for more precise determination of an analyte and a method for determination of the analyte using a particular algorithm for transforming measurement data into a value indicative for the initial concentration of an analyte.

In particular, the instrument and the method are adapted to the analysis of Real-Time Polymerase Chain Reaction signals.

FIG 2

EP 1 798 542 A1

**Description**

Field of the invention

Subject of the present invention is a method for the determination of the presence of an analyte and an analytical instrument capable of performing said method.

Background of the invention

The invention is useful in the field of analytics or diagnostics, particularly in the diagnostics of nucleic acids. The analysis of nucleic acids has been improved considerably by the invention of the Polymerase Chain Reaction (PCR) as disclosed in EP 0 200 362 and EP 0 201 184. During the course of this method, the amount of nucleic acids is increased at least partially exponentially, as theoretically from each nucleic sequence present in the reaction mixture in each reaction cycle an additional nucleic acid is created, and each of said sequences can act as a template for the creation of a further nucleic acid sequence in the following reaction cycle. The amount of nucleic acids created is limited by the amount of reagents, like enzymes, primers and nucleotides, contained in the reaction mixture. Therefore, the concentration plotted versus the time or cycle number of the PCR resembles an (asymmetric) sigmoid curve.

A further improvement of PCR is the so-called Real-Time-PCR. In this method, a signal is created and detected during amplification. The signal is representative of the amount of nucleic acids created during amplification and thus present in the reaction mixture. In a first embodiment, e.g. disclosed in EP 0 512 334, the signal is created by a compound capable of intercalating into double stranded nucleic acids while changing its fluorescence properties. In another embodiment, as disclosed in EP 0 543 942, each extension reaction of a primer leads to the cleavage of a probe, labeled by a quencher and an emitter dye such that when cleaving the probe, the quencher cannot quench the light emission of the reporter dye, so that a signal can be detected.

The determination of the amount of nucleic acid originally present in the sample prior to amplification (quantification or quantitation) has been the goal of several investigations. Generally, the higher the amount the smaller the number of reaction cycles needed to receive a defined absolute intensity of the signal (threshold). The earliest calculations therefore were based on the determination of the threshold cycle $(C_T)$-value and manually comparing it to a preset $C_T$ value. The higher the $C_T$-value, the lower the original amount of nucleic acids present. Obviously, the (integer) number of reaction cycles conducted can only be a very rough estimate of the amount originally present. Thus, in a further attempt to determine concentrations the signals intensities lying between distinct measurement values were interpolated (linear or logarithmically). This interpolation based method had some deficiencies in case of imprecise signal measurements or even signal outliers (spikes). To avoid this, algorithms were established to create continuous growth curves from a defined number of measurements during the amplification reaction. One example of an algorithm is the so-called Sawitzky Golay Filter (US 6,503,720). The resulting curves were called growth curves.

In an approach of this kind, the standard deviation of the growth curve was determined and a deviation of the signal from a defined multiplicity of the standard deviation (e.g. 10 times the standard deviation) was considered to be indicative for the $C_T$ value. In EP 0 686 699 there is described a conditional recursive formula which can be used for fitting of the measured values to a theoretical curve. However, the application is cumbersome and the fitting process is not described. It might lead to strong parameter correlations and inaccurate results in certain cases. In another approach, the maximum of the second derivative of the growth curve was considered to be the representative value. In yet another approach, the first derivative maximum was used. Such approaches are described in US 6,503,720. In another approach, a pre-set threshold interpolation between maximal and minimal signal was used.

In BioTechniques 22, 130-138, 1997 there is described a method for discriminating between concentrations of 100 and 10 copies of template using normalizing measurement data with the difference between the minimum and the maximum value of each measurement with each different concentration. The curves are analyzed visually/manually.

In BMC Bioinformatics 2005 6:62 there is proposed to normalize the amplitudes of the curves to improve the standard curve. Again, the maximum and the minimum value are taken to normalize. The proposed method is not automated.

These two mathematically equivalent methods have several limitations. The accuracy of the references (minimum and maximum) is limited due to the signal imprecision. In case of the saturation not taking place fully the maximum is not determined reliably enough. Additionally, a non-constant baseline can further negatively influence the threshold result accuracy.

In WO 05/30990 there is disclosed a method for quantifying nucleic acids by using the comparison of a target value and a standard value determined from the respective growth curves for the amplification of the target and the standard, respectively.

In EP 1 518 935 there is disclosed a method for the quantitative determination of nucleic acids using recording a target growth curve and a standard growth curve, defining a target growth curve value and a standard growth curve value and then calculating the amount of nucleic acid originally present using a non-linear calibration equation

This kind of method for the quantification of nucleic acid is standard. The present invention is delivering improved input values for it.

It was the object of the present invention to improve the quantitative analysis, particularly to provide a method which is independent on photometer background and transmission and is less dependent on signal inhibition, e.g PCR inhibition.

Brief description of the drawings:

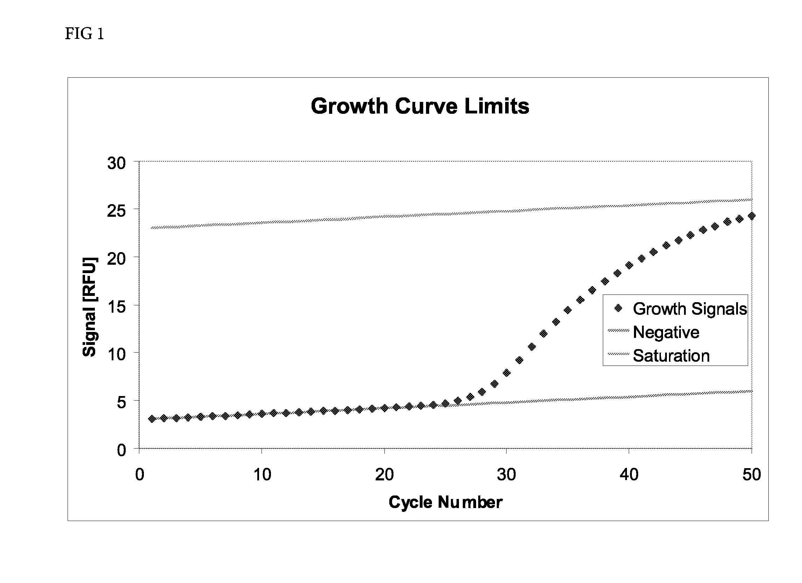

In FIG 1 there is shown a growth curve and the saturation as well as the base line (negative curve) according to the invention.

In FIG 2 there is depicted a growth curve showing the saturation, the negative curve and a defined partial growth value determined using the method according to the invention.

Summary of the invention

In a first embodiment, the invention is directed to a method for determining the presence of a nucleic acid in a sample, comprising

- impinging light on the sample,
- detecting signals from said sample in known intervals,
- transforming said signals into measurement data,
- storing said measurement data,
- transforming said measurement data to a growth curve through a mathematical algorithm,
- selecting a digital value on said growth curve, and
- determining the presence of said nucleic acid from the comparison of said selected digital value with calibrated digital values,

wherein said selection of said digital value comprises

- estimating a negative curve (no growth),
- a saturation curve (maximum growth), and
- therefrom determining a digital value on said growth curve representative of a defined partial growth of between 1% and 99% of said difference between said negative and saturation curve.

In another embodiment, the invention is directed to an analytical instrument for determining the presence of an analyte, comprising

- a light source,
- a signal detection unit,
- a signal to measurement value transformation unit,
- a measurement value storage,
- a measurement value to growth curve transformation unit,
- a growth curve to digital value transformation unit, and
- a digital value comparison unit,

wherein said growth curve to digital value transformation unit comprises a computer loaded with an algorithm calculating

- a negative curve (estimated for no growth), and
- a saturation curve (estimated for maximal growth)

and therefrom determining a digital value on said growth curve representative of a defined partial growth of between 1% and 99% of said difference between said negative and saturation curve.

A further subject of the invention is a computer program for determining the presence of a nucleic acid in a sample comprising

- transforming measurement data to a growth curve through a mathematical algorithm,
- selecting a digital value on said growth curve and
- determining the presence of said nucleic acid from the comparison of said selected digital value with calibrated digital values,

wherein said selection of said digital value comprises

- estimating a negative curve (no growth),
- a saturation curve (maximum growth), and
- therefrom determining a digital value on said growth curve representative of a defined partial growth of between 1% and 99% of said difference between said negative and saturation curve.

<u>Detailed description of the invention</u>

While the invention is useful for the determination on any analyte, in most of the following the invention is exemplified for the determination of nucleic acids. Methods for determining the presence of a nucleic acid in a sample are generally known. They usually are based on the detection of the occurrence of hybridization of nucleic acid probes, e.g. oligonucleotides, to the nucleic acid to be determined, i.e. the formation of hybrids. However, there are also methods using detecting the interaction of other chemical compounds with the nucleic acid to be determined or with compounds derived therefrom, e.g. detecting the occurrence of intercalation of intercalating dyes into double stranded nucleic acids. The present invention provides means to determine the analyte by tracking the course of a reaction over a period of time, e.g. by collecting data received from said tracking and interpreting the data received. The present invention therefore is particularly useful for tracking of reactions in which a detectable change in the sample is a measure of the absence, presence or/and the amount of the analyte present in said sample. Those determinations are also called kinetic determinations.

A sample in the definition of the present invention is a liquid containing the analyte, e.g. the nucleic acid or/and any nucleic acids derived therefrom, e.g. any products of an amplification reaction, in which the presence of the nucleic acid is to be determined. The original sample may or may not contain the analyte in an original concentration or amount. The present invention is capable of determining whether the analyte is present at all. The present invention can also support and improve the determining in which amount or concentration the original sample contains said analyte. The pre-processing of the measurement data results in a continuous statistical imprecision free growth curve. Quantification measures (e.g. $C_T$) derived therefrom have an improved robustness and accuracy compared to present methods.

A sample may also be a liquid derived from the original sample by removing or adding components. For example, it is widely recognized that the determination of nucleic acids in a sample is improved, if the nucleic acids are isolated or purified and thereafter are dissolved in a liquid allowing the determination to take place. Such nucleic acid purification is generally known to those skilled in the art. It is also well known to relate the amount of nucleic acids originally present in a sample with the amount of nucleic acids present in a sample derived from said original sample. Again, it is well known to conclude the concentration of the nucleic acid in said original sample volume from the amount or concentration of nucleic acids present in the sample derived therefrom.

Original samples may be taken from any source. In health care, common samples are samples taken from the body, preferably the human body, such as blood or urine, or samples derived therefrom, like serum or plasma. In food analysis, samples may be direct liquids, such as juice, but may also be liquids derived from solid samples, like extracts from fruit, cheese or meat.

As mentioned above, many samples, particularly in the nucleic acid determination field, require isolation of the analyte from components in the sample disturbing the analysis. Such isolation is well known to the man skilled in the art.

The method according to the invention comprises adding to the sample the reactant and all compounds needed for the reaction to occur, thus creating a reaction mixture. This reaction mixture is the subject of the detection. The reaction mixture can be provided during the detection part of the method, but preferably is done prior to the start of the detection.

The present invention includes detecting a signal from the reaction mixture. This signal should be related with the reaction occurring, if any, in the reaction mixture. Therefore, any reaction during which a signal can be created that can be detected can be monitored in the process according to the present invention. The signal can be any signal that is detectable, e.g. electrochemically or electromagnetically. Preferably, the signal is an electromagnetic signal, most preferred an electromagnetic wave of a particular characteristic, such as light, be it visible or invisible to the human eye. Instruments or devices for detecting such signals are generally known in the art.

A preferred method for the determination of nucleic acids includes amplification of nucleic acid sequences to be detected. One of the methods for amplification of nucleic acids is the polymerase chain reaction (PCR, disclosed in EP 0 201 184 and EP 200 362). This method is a process including a reaction cycle comprising the steps of subjecting double stranded nucleic acids in a reaction mixture to reversibly denaturing conditions, e.g. by heating above the melting temperature of the double stranded nucleic acids, annealing a primer to each of the single stranded nucleic acids prepared, and extending the primers by attaching mononucleotides to the ends of said primers using the sequence of the single stranded nucleic acid as a template for newly formed sequences. This reaction cycle is repeated as many times as desired, using extension products of the earlier cycles as templates for the extension of primers in the next cycles, to prepare as many extension products as needed to allow their detection. It has proven convenient to repeat the reaction cycle between 10 and 100 times, more preferably between 20 and 50 times. The amount of cycles needed for detectable nucleic acid creation may depend upon the amount of a nucleic acid to be determined. For example, for analyte nucleic acids usually present in the sample in very tiny amounts, like in the case of an infection with Human Immunodeficiency Virus (HIV) or Hepatitis C Virus (HCV), conducting the analysis will be expected to take more cycles than for analytes usually present in higher concentrations. These considerations are known to those skilled in the art.

Preferably, the amplification of the nucleic acids in the reaction mixture is the reaction monitored. In this case, the increase of the amount of nucleic acids, particularly those representative for the presence or/and the amount of the analyte nucleic acid, is related with a signal to be detected during the course of the reaction. Those methods based on PCR are usually called kinetic PCR. Preferred reactions are those disclosed in EP 0 512 334 and EP 0 543 942.

This signal may be the a signal that is created during the course of the reaction without any further action, i.e. a rise in temperature of the reaction mixture caused by the energy set free by the reaction. In a preferred mode, the sample is subjected to an influence from outside, e.g. by providing energy to the reaction mixture. This energy usually is provided in a form providing a signal from the reaction mixture, e.g. a label contained in the mixture, which is correlated with the course of the reaction occurring in the reaction mixture. In one preferred embodiment, the energy is provided by applying light irradiation to the reaction mixture. The light should have the property to provoke a signal from the reaction mixture related to the reaction occurring.

In a preferred mode, the signal is light escaping the reaction mixture. In case of irradiating the reaction mixture with light, this light may have the same characteristic as the light used for irradiation. Then the detection is absorption detection. In a preferred mode, the light escaping the reaction mixture is different from the irradiating light. In this case, the escaping light preferably is created by a fluorescence process. The fluorescent light will be detected as a measure of the course of the reaction.

This signal is detected in known intervals. An interval is the distance between subsequent detections, preferably not counting duplicates. Those intervals are chosen to adequately monitor the course of a reaction or a number of reactions performed in said sample. Therefore, the signals are detected preferably during the course of the reaction. While the detection may be started together with the start of the reaction, this is not required. The detection may be stopped when the reaction has come to completion, but may be stopped earlier or may be continued for some time after completion of the reaction. A man skilled in the art will know that when there are no significant changes of the signal any more, the detection can be stopped.

Generally, the intervals at which the signals are detected will depend upon the desired accuracy of the determination. Generally, the shorter the intervals are, the higher will be the accuracy. For kinetic PCR, preferably the length of each interval used for detection of the signal coincide with the time of one reaction cycle. As the lengths of the reaction cycles preferably are identical, the intervals will be identical, too. It will be appreciated, that each detection may be constituted by a series of measurements within a very short time (considerably shorter than, e.g. only below 1 % of, the interval as mentioned above). Preferably, in PCR, a signal is detected more than once, preferably between 2 and 10 times, during a plateau phase of each cycle. A plateau phase in a particular cycle is a phase wherein the temperature of the reaction mixture is not substantially changed over time. Usually, this is the annealing phase of each cycle. This may be used to exclude instrument mistakes. For PCR, the length of one interval will preferably be between 0.1 sec and 1 hr, more preferably between 1 sec and 10 min, and most preferred between 10 sec and 5 min.

In other methods, like NASBA or SDA, the cycles may not be clearly separated from each other by distinct process steps. Therefore, the intervals for detecting the signal can be chose more deliberately. For example, the intervals during such reactions may be between 0.1 sec up to 2 min, more preferably between 1 sec and 1 min, and most preferably between 2 sec and 20 sec.

The signal may be created during the reaction as a result of the reaction without further inducement. Preferably, the signal is induced by providing energy to the reaction mixture, such as electrochemical or electromagnetic energy. Preferably, the method according to the invention includes irradiating the reaction mixture with electromagnetic waves, most preferably with light. The light preferably is chosen such that it interacts with components in the reaction mixture dependent from the progress of the reaction to be monitored. Preferably, any components of the reaction or components related with components of the reaction are designed to absorb the light irradiated to the reaction mixture. Therefore, preferred methods are based on irradiating the sample with light having a particular characteristic and detecting light escaping said sample.

The characteristics of the light impinged on said sample depend upon the particular format and components of the sample. Assay formats well known to the man skilled in the art make use of light absorbing labels, e.g. label attached to a probe designed to hybridize to the nucleic acid to be determined, or a light absorbing chemical compound. Those formats include the change of a detectable property, e.g. a property caused by the change of the composition of the sample over time, preferably the absorption or emission of light. This change of the property caused by said reaction is determined by detecting a signal received from said sample during the time of the reaction. In hybridization based formats a signal related to one or more labels attached to probes hybridizing with the nucleic acid the presence of which is to be determined or with nucleic acids derived therefrom, is detected.

Preferred reactions that can be tracked with the method of the present invention are disclosed in EP 0 512 334 and EP 0 543 942, the disclosure of which is incorporated herein regarding the conditions to run those reactions.

Each signal is then transformed into a measurement data value. This preferably is a digital value that can be stored electronically in a storage. Suitable storage is well known as memory in computer business, e.g. in personal computers. The transformation can be done according to methods widely known in the art, e.g. analog / digital converters. From said storage, the measurement values can be read to be subject of calculations using those values. During this process, the values may be subject to further manipulations, e.g. calibration.

In the next step, the measurement values are transformed into the continuous growth curve. This can be done by any suitable method using mathematical algorithms, e.g. a Sawitzky Golay Filter or spline interpolation. In a preferred embodiment, this transformation is done by an algorithm for non-linear regression fitting of the growth curve to the measurement values using a growth curve model formula using between 5 and 11 parameters. In this context, an algorithm for non-linear regression fitting is an algorithm that creates a continuous growth curve from the measurement values based on a non-linear regression formula. A non-linear regression formula is a formula which is not based on a linear relation. Non-linear regression is described in general terms in: D. M. Bates, D. G. Watts: Nonlinear Regression Analysis and its Applications, Wiley (1988).

A growth curve model is a mathematical formula that describes the continuous dependence of a signal function from a time variable. The signal value is defined as a measure of the detected signal. The time variable is defined as integer cycle number when the signal is measured and its continuous extension.

A comprehensive growth curve model requires at least three partial models:

- Negative curve (baseline),
- Saturated signal, and
- Growth phase.

The negative signal model is representing the signal without any oligonucleotide probe cleavage, hybridization, intercalation or the like. For the negative curve model usually a constant is used. The negative curve is preferably estimated as a constant or a polynom of 1st or 2nd order. More preferably, for the negative curve model usually a constant is used. Most preferably, a linear function is used to accommodate for a nonzero drift in the negative signal.

The mathematical representation for the negative curve is most preferably

$$f_N(x) = b_1 \cdot (1 + b_2 \cdot x)$$

The definition of the parameters can be seen from Table 1.

Table 1:

| parameter | dimension | meaning | preferably |
|---|---|---|---|
| $f_N$ | Y | Measurement data, (fluorescence) signal (fluorescence) signal | relative fluorescence units |
| x | X | time, cycle number | data points, integers |
| b1 | Y | Baseline Intercept | unquenched signal part |
| b2 | 1/X | Relative drift | slope of linear negative signal |

The saturated signal model is representing the signal with 100% oligonucleotide probe cleavage, hybridization, intercalation or the like. For the saturated curve model usually a constant is used. Improved models are a linear function to accommodate for a nonzero drift or an exponentially decaying function to accommodate for denaturation effects or a combination of these. Preferably a constant in addition to the linear negative signal is used.

The mathematical representation of the saturation curve is preferably

$$f_S(x) = b_1 \cdot (1 + b_2 \cdot x) + b_3$$

The definition of the parameters can be seen from Table 2.

Table 2:

| parameter | dimension | meaning | preferably |
|---|---|---|---|
| $f_S$ | Y | Measurement data, (fluorescence) signal | relative fluorescence units |
| X | X | time, cycle number | data points, integers |
| b1 | Y | Baseline Intercept | unquenched signal part |
| b2 | 1/X | Relative drift | slope of linear negative signal |
| b3 | Y | Saturated growth above negative signal | fluorescence increase |

For the growth phase usually logistic or sigmoid functions can be used. Preferably, a more complex model is used. The mathematical representation for the growth curve phase is preferably (formula I)

$$f(x) = b_1 \cdot (1 + b_2 \cdot x) + \frac{b_3}{\left[1 + \exp\{-b_4 \cdot (x - b_5)\}\right] \cdot \left[1 + \exp\{-b_6 \cdot (x - b_7)\}\right]}$$

The definition of the parameters can be seen from Table 3.

In case of the measurement conditions change at one point the model preferably has the mathematical representation of formula II comprising an additional term compared to the above formula I:

$$f(x) = b_1 \cdot (1 + b_2 \cdot x) + \frac{b_3}{\left[1 + \exp\{-b_4 \cdot (x - b_5)\}\right] \cdot \left[1 + \exp\{-b_6 \cdot (x - b_7)\}\right]} - \frac{b_8}{2} \cdot \left[1 + sign\{s - x + 0.5\}\right]$$

In this formula, the additional variables are defined as follows:

sign: Signum function sign $(x) := x/\sqrt{(x^2)}$, x<>0; sign (0):=0.

s: pre-set step cycle number (cycle number at which a measurement condition, e.g. temperature has changed)

Table 3:

| Parameter | Dimension | Name | Description |
|---|---|---|---|
| f | Y | Measurement data, (Fluorescence signal) | relative fluorescence units |
| x | X | Time, Cycle number | data points, integers |
| b1 | Y | Baseline Intercept | unquenched signal part |
| b2 | 1/X | Relative drift | slope of linear negative signal |
| b3 | $\Delta$Y | Saturated growth above negative signal | fluorescence increase |
| b4 | 1/X | Slope 1 | <ln(2) |
| b5 | X | Inflection 1 | Exponential phase |
| b6 | 1/X | Slope 2 | >0 |
| b7 | X | Inflection 2 | Middle of Growth |

(continued)

| Parameter | Dimension | Name | Description |
|-----------|-----------|------|-------------|
| b8 | Y | (optional) step parameter | Step Size |

While the signal value (input from measurement) and the time variable are available from the measurement data, the other parameters are determined by applying a non-linear regression algorithm. Parameter $b_1$ basically represents the intercept of the growth curve with the y axis after an optional step (see $b_8$). The additional term $b_3/(1+\exp)$ $(b_4\ b_5))/\ (1+\exp(b_6\ b_7))$ is negligible in this definition. Parameter $b_2$ is representing the relative drift of the negative baseline per cycle. Parameter $b_3$ represents the estimation of maximal growth of the value over the baseline. Parameter $b_4$ represents the slope of an approximate sigmoid function in the early exponential phase. $\exp(b_4)$ is an estimation of the amplification efficiency in that phase which means that $b_4$ is typically smaller than $\ln(2)$ for PCR. The related parameter $b_5$ represents the inflection point of that partial sigmoid function. The parameter $b_6$ represents the slope of an approximate sigmoid function in the saturation phase. The related parameter $b_7$ represents the inflection point of that partial sigmoid function. Parameter $b_7$ is higher than $b_5$ and $b_6$ and is smaller than $b_4$ in this definition. Optional parameter $b_8$ is the estimation of a signal step size occurring at a pre-set point because of a permanent change in measurement condition, usually a temperature change.

It is obvious to a man skilled in the art that the above formula can be written in different forms leading to the same result f(x). Those formulae are as well suitable as the model and are considered to be covered by the definition of the invention. Those rewritten formulae are called mathematical equivalents. A statistically sensible procedure is the transformation of the y data values to increase the y variance stability. The proposed formulation is appropriate for constant signal variance over the whole range.

The model parameters are preferably determined by a non-linear regression method like a Levenberg-Marquardt or Nelder-Mead simplex algorithm.

In one embodiment, the invention comprises determining the presence of said nucleic acid from the comparison of said selected digital value with a calibrated digital value, wherein said selection of said digital value comprises

- estimating a negative curve (no growth) ,
- a saturation curve (maximum growth), and
- therefrom determining a digital value on said growth curve representative of a defined partial growth of between 1% and 99% of said difference between said negative and saturation curve.

Most preferred, the negative curve is derived from the parameters of the above mentioned growth curve and the saturation curve is derived from the parameters of the above mentioned growth curve.

One feature of the invention is the determination of the difference of the negative curve from the saturation curve. This difference may be described with the formulae of the negative and the saturation curve. Using this difference, a digital value on the growth curve is determined. This value t is determined by selecting a defined partial growth of between 1 and 99%, more preferred between 1 and 50% and most preferred between 1 and 10% of the difference between the saturation curve and the negative curve and calculating the value ($x_t$) of the cycle number or the time on the growth curve for this selected partial growth.

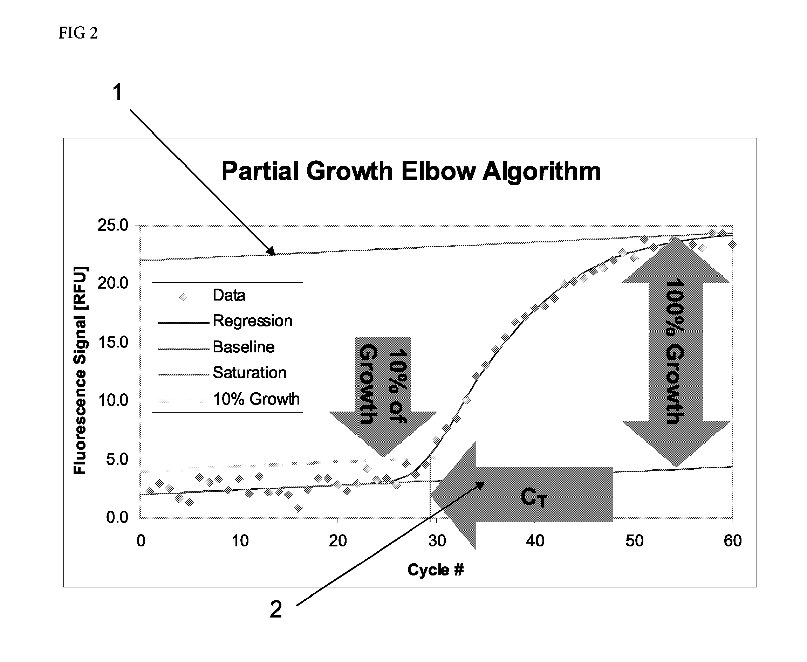

This step of the method according to the invention is shown in exemplary form in FIG 2. The figure shows data (dots), the growth curve (regression), the negative curve (2), the saturation curve (1), the difference (100% growth) and the partial growth of 10% (10% growth) as well as the point on the X axis, where 5% partial growth is achieved ($C_T$).

The mathematical representation of the procedure is

$$y(xt) = yN(xt) + t\ (yS(xt)\text{-}yN(xt))$$

wherein there are

xt          the cycle number at the partial growth t (i.e. the partial growth threshold cycle number),

t          the partial growth in %/100,

y(xt)          the growth curve function y(x) at the partial growth threshold cycle number,

x          the cycle number,

yN(xt)          the negative growth curve function yN(x) at the partial growth threshold cycle number xt,

yS(xt)          the saturated growth curve function yS(x) at the partial growth threshold cycle number xt.

The parameter are described in more detail in table 4

Table 4:

| Parameter | Dimension | Name | Description |
|---|---|---|---|
| $x_t$ | X | Partial growth threshold cycle number | (fractional) cycle number where t% of the growth is reached |
| t | - | Partial growth threshold | Limit where the signal reaches a certain relative level between negative and saturation signal |
| y(x) | Y | Growth curve function | Growth curve model |
| x | X | Time, cycle number | data points, integers |
| $y_N(x)$ | Y | Negative growth curve function | Negative growth curve model |
| $y_S(x)$ | Y | Saturated growth curve function | Saturated growth curve model |

The partial growth threshold cycle number can be determined by minimizing

$$[Y_t(x) - ( y_N(x) + t\, (y_S(x)\text{-}y_N(x)))]^2$$

with respect to x using a standard minimization method.

A special advantage of the described determination is that the partial growth threshold cycle number is independent from a constant baseline offset as well as independent from a multiplicative factor possibly occurring during the detection process.

The present invention is useful for the qualitative determination of the analyte, i.e. the determination that the analyte is present in an amount exceeding a predefined threshold value ("positive" or "negative"). In this case, it is preferred to use a statistical measure for determining the presence or absence of the analyte. For example, a qualitative determination may include the determination of whether a particular $C_T$-value is above a threshold value given in a calibration assay, e.g. representing a threshold concentration of the analyte.

The present invention is also useful for quantitative determination of analytes, i.e. for determining the amount of analyte or its concentration in the sample. In this case, the optimized growth curve instead of the original raw data is compared to a calibration curve set (e.g. an optimized growth curve received from the measurement of a standard or calibrator nucleic acid). So, the negative effects of signal measurement imprecision, signal outliers are minimized. The further calculation steps for determining the final result can remain the same as in the standard method. The step includes determining the concentration of the analyte from a calibration curve using the digital value received in the above method. Preferably, the value $x_t$ of the determination using the real sample or a value derived thereform is compared to a calibration curve relating the $x_t$ values or values derived therefrom of growth curves received from determinations using standard samples having known concentrations at the same partial growth threshold as used for the determination of the digital value for the analyte.

More preferred, the present invention uses a calibration growth curve (either measured using one or more samples containing a defined concentration of the analyte), or one or more artificial, mathematical growth curves, or a set of digital values, each representing a particular concentration of the analyte. In case of measurement of one or more calibrator samples, the same mathematical steps should be performed as if the calibrator samples were real samples. From the digital values received, a calibrator curve is created relating digital values to concentrations, which is then used to derive the concentration of the sample with unknown concentration from the digital value determined from the real sample. In case of a mathematical formula used as the calibration curve, the concentration can be directly derived from the digital value determined and the calibration curve.

Thus, the present invention only requires one parameter for quantifying measurement results. This parameter is the X value of the intercept of the partial growth line with the growth curve.

Another subject of the invention is an analytical instrument for determining the presence of an analyte, comprising

- a light source,
- a signal detection unit,
- a signal to measurement value transformation unit,

- a measurement value storage,
- a measurement value to growth curve transformation unit,
- a growth curve to digital value transformation unit, and
- a digital value comparison unit,

wherein said growth curve to digital value transformation unit comprises a computer loaded with an algorithm calculating

- a negative curve (estimated for no growth), and
- a saturation curve (estimated for maximal growth)

and therefrom determining a digital value on said growth curve representative of a defined partial growth of between 1% and 99% of said difference between said negative and saturation curve.

Such instruments can be assembled from commercially available units. The present invention, however, provides that less expensive units can be used to achieve the same or even superior results in the determination of analytes. Particularly, the signal detection unit used in the instrument of the present invention can be chosen to be less precise. This is the case for e.g. analog to digital converter with reduced number of digits, omission of pre-amplifiers or a darker light source. An especially attractive option is to user narrower wavelength transmission filters which results in a reduction of light crossover (crosstalk or bleed-over) in case of a parallel multicolor detection of multiple analytes.

In one aspect of the invention, the instrument comprises a light source. Again, as the algorithm of the present invention can sort out much better spikes created by varying intensities of the light source, much cheaper light sources can be used than presently, or less stabilization of the light source is needed.

In one aspect of the invention, the signal is a fluorescence signal. The light detectors are adapted to be capable of receiving and detecting the fluorescent light.

Any model can be used to create the growth curve. A particularly preferred model used in the computer program running on the instrument is based on the formula

$$f(x) = b_1 \cdot (1 + b_2 \cdot x) + \frac{b_3}{[1 + \exp\{-b_4 \cdot (x - b_5)\}] \cdot [1 + \exp\{-b_6 \cdot (x - b_7)\}]}$$

or its mathematic equivalents.

The instrument can be used for quantitative determination of the analyte, if said computer is further loaded with an algorithm to select a value on said growth curve indicative of the concentration of said nucleic acid present in said sample.

Advantages of using the new algorithm are manifold. Components of instruments used for the analysis can contribute to variations in signal not related to the presence of the analyte, for example by variation of the intensity of light provided by the light source. For example, the intensity of the light may change in time because of increasing temperatures in the instrument (drift). Such variants can be corrected by the method. Furthermore, it is possible to use components in the instrument which have reduced precision, because the algorithm automatically corrects imprecision created by this component.

An exemplary growth curve showing the physical meaning of the parameters according to the invention is shown in FIG 2. It shows the measurement values (Data) in light dots, a continuous growth curve, a base line (lower line) and a saturation line (upper line). b1 is the Y-value for X = 0 on the base line, b2 is the slope of the base line (Baseline), b3 is the Y-value for X = 0 on the saturation line, b4 is the slope of the growth curve at X-value of b5, and b6 is the slope of the growth curve at X = b7.

The present invention uses a growth curve to digital value transformation unit comprising a computer loaded with an algorithm calculating

- a negative curve (estimated for no growth) and
- a saturation curve (estimated for maximal growth)

and therefrom determining a digital value on said growth curve representative of a defined partial growth of between 1% and 99% of said difference between said negative and saturation curve.

Such transformation unit can be any computer loaded with an algorithm for determining the digital value. Such algorithm can be created using the formulae given above. Details are described above for the method according to the invention.

A further subject of the invention is therefore a computer program for determining the presence of a nucleic acid in a sample comprising

- transforming measurement data to a growth curve through a mathematical algorithm,

- selecting a digital value on said growth curve and

- determining the presence of said nucleic acid from the comparison of said selected digital value with calibrated digital values,

wherein said selection of said digital value comprises

- estimating a negative curve (no growth) ,

- a saturation curve (maximum growth), and

- therefrom determining a digital value on said growth curve representative of a defined partial growth of between 1% and 99% of said difference between said negative and saturation curve.

Preferred embodiments are detailed above in the description of the method and the instrument according to the invention. Particularly, the computer program is preferably loaded on the instrument according to the invention in order to direct the steps of the method of the invention on the instrument including its units according to the invention.
While the foregoing invention has been described in some detail for purposes of clarity and understanding, it will be clear to one skilled in the art from a reading of this disclosure that various changes in form and detail can be made without departing from the true scope of the invention. For example, all the techniques and apparatus described above can be used in various combinations. All publications, patents, patent applications, and/or other documents cited in this application are incorporated by reference in their entirety for all purposes to the same extent as if each individual publication, patent, patent application, and/or other document were individually indicated to be incorporated by reference for all purposes.

**Claims**

1. An analytical instrument for determining the presence of an analyte, comprising:

    - a light source,
    - a signal detection unit,
    - a signal to measurement data transformation unit,
    - a measurement data storage,
    - a measurement data to growth curve transformation unit,
    - a growth curve to digital value transformation unit, and
    - a digital value comparison unit,

    wherein said growth curve to digital value transformation unit comprises a computer loaded with an algorithm calculating

    - a negative curve (estimated for no growth) and
    - a saturation curve (estimated for maximal growth)

    and therefrom determining a digital value on said growth curve representative of a defined partial growth of between 1% and 99% of said difference between said negative and saturation curve.

2. The instrument according to claim 1, where the negative curve is estimated as a constant or polynom of $1^{st}$ or $2^{nd}$ order.

3. The instrument according to claim 1, where the saturated curve is estimated as a decaying, a constant or a linear superposition over the negative curve.

4. The instrument according to any of claims 1 to 3, wherein the negative curve is estimated as a linear curve and the saturated curve is estimated as a linear curve shifted by a constant over the negative curve.

5.   The instrument according to any of the proceeding claims, wherein said signal is a fluorescence signal.

6.   The instrument according to any of the proceeding claims wherein said partial growth is between 1 and 55% of said difference.

7.   The instrument according to any of the proceeding claims wherein said determined digital value on said growth curve is indicative or partially indicative of said concentration.

8.   The instrument according to any of the proceeding claims wherein said algorithm comprises determining the partial growth threshold cycle number xt using the formula:

$$y(xt) = yN(xt) + t \, (yS(xt)\text{-}yN(xt))$$

wherein there are

xt the cycle number at the partial growth t,
t the partial growth in %/100,
y(xt) the growth curve function y(x) at the partial growth threshold cycle number,
x the time or cycle number,
yN(xt) the negative growth curve function yN(x) at the partial growth threshold cycle number xt,
yS(xt) the saturated growth curve function yS(x) at the partial growth threshold cycle number xt.

9.   The instrument according to claim 8, wherein said growth curve function y(x) is determined using the formula:

$$y(x) = b_1 \cdot (1 + b_2 \cdot x) + \frac{b_3}{\left[1 + \exp\left\{-b_4 \cdot (x - b_5)\right\}\right] \cdot \left[1 + \exp\left\{-b_6 \cdot (x - b_7)\right\}\right]}$$

wherein there are

f the measurement data,
x the time or cycle number,
b 1 the baseline intercept,
b2 the relative drift of the linear negative signal,
b3 the saturated growth above negative signal,
b4 the slope,
b5 the inflection in the exponential phase,
b6 the slope of the saturation curve, and
b7 the inflection in the middle of growth.

10.   A method for determining the presence of a nucleic acid in a sample, comprising :

- impinging light on the sample,
- detecting signals from said sample in known intervals,
- transforming said signals into measurement data,
- storing said measurement data,
- transforming said measurement data to a growth curve through a mathematical algorithm,
- selecting a digital value on said growth curve and
- determining the presence of said nucleic acid from the comparison of said selected digital value with calibrated digital values,

wherein said selection of said digital value comprises

- estimating a negative curve (no growth),
- a saturation curve (maximum growth), and
- therefrom determining a digital value on said growth curve representative of a defined partial growth of between 1% and 99% of said difference between said negative and saturation curve.

**11.** The method according to claim 9, wherein said transformation of said measurement values comprises a fitting, filtering or interpolation algorithm.

**12.** The method according to claim 10, wherein said fitting algorithm is a non-linear regression fitting algorithm.

**13.** The method according to any of claims 9 to 11 comprising amplifying sequences of said nucleic acid to be determined and therewith changing the capability of the sample to react on said light impinged by emitting said signal.

**14.** The method according to any of claims 9 to 12, wherein said algorithm comprises determining the partial growth threshold cycle number xt using the formula:

$$y(xt) = yN(xt) + t\,(yS(xt)\text{-}yN(xt))$$

wherein there are

xt the cycle number at the partial growth t,
t the partial growth in %/100,
y(xt) the growth curve function y(x) at the partial growth threshold cycle number,
x the cycle number,
yN(xt) the negative growth curve function yN(x) at the partial growth threshold cycle number xt,
yS(xt) the saturated growth curve function yS(x) at the partial growth threshold cycle number xt.

**15.** The method according to claim 14, wherein said growth curve function y(x) is determined using the formula:

$$y(x) = b_1 \cdot (1 + b_2 \cdot x) + \frac{b_3}{\left[1 + \exp\{-b_4 \cdot (x - b_5)\}\right] \cdot \left[1 + \exp\{-b_6 \cdot (x - b_7)\}\right]}$$

wherein there are

f the measurement data,
x the time or cycle number,
b 1 the baseline intercept,
b2 the relative drift of the linear negative signal,
b3 the saturated growth above negative signal,
b4 the slope,
b5 the inflection in the exponential phase,
b6 the slope of the saturation curve, and
b7 the inflection in the middle of growth.

**16.** A computer program for determining the presence of a nucleic acid in a sample comprising

- transforming measurement data to a growth curve through a mathematical algorithm,
- selecting a digital value on said growth curve and
- determining the presence of said nucleic acid from the comparison of said selected digital value with calibrated digital values,

wherein said selection of said digital value comprises

- estimating a negative curve (no growth),

- a saturation curve (maximum growth), and
- therefrom determining a digital value on said growth curve representative of a defined partial growth of between 1% and 99% of said difference between said negative and saturation curve.

FIG 1

Growth Curve Limits

EP 1 798 542 A1

FIG 2

Partial Growth Elbow Algorithm

Legend: Data, Regression, Baseline, Saturation, 10% Growth

100% Growth
10% of Growth
$C_T$
Fluorescence Signal [RFU]
Cycle #
1
2

European Patent
Office

**EUROPEAN SEARCH REPORT**

Application Number

EP 05 11 2358

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 97/46714 A (UNIVERSITY OF UTAH RESEARCH FOUNDATION; WITTWER, CARL, T; RIRIE, KIRK,) 11 December 1997 (1997-12-11) * page 47, line 15 - page 50, line 8 * * figures 23,24,28,29 * ----- | 1-8, 10-14,16 | INV. G01N21/64 ADD. G01N21/27 |
| X | LIU W ET AL: "VALIDATION OF A QUANTITATIVE METHOD FOR REAL TIME PCR KINETICS" BIOCHEMICAL AND BIOPHYSICAL RESEARCH COMMUNICATIONS, ACADEMIC PRESS, SAN DIEGO, CA, US, vol. 294, no. 2, 7 June 2002 (2002-06-07), pages 347-353, XP002319698 ISSN: 0006-291X * page 348, right-hand column * ----- | 1-7, 9-13,15, 16 | |
| X | ZHAO SHENG ET AL: "Comprehensive algorithm for quantitative real-time polymerase chain reaction" JOURNAL OF COMPUTATIONAL BIOLOGY, vol. 12, no. 8, October 2005 (2005-10), pages 1047-1064, XP002380886 ISSN: 1066-5277 Section 3 ----- | 1,10 | TECHNICAL FIELDS SEARCHED (IPC) G01N C12Q |

The present search report has been drawn up for all claims

| Place of search | Date of completion of the search | Examiner |
|---|---|---|
| The Hague | 17 May 2006 | D'Alessandro, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 05 11 2358

This annex lists the patent family members relating to the patent documents cited in the above-mentioned European search report.
The members are as contained in the European Patent Office EDP file on
The European Patent Office is in no way liable for these particulars which are merely given for the purpose of information.

17-05-2006

| Patent document cited in search report | | Publication date | Patent family member(s) | | Publication date |
|---|---|---|---|---|---|
| WO 9746714 | A | 11-12-1997 | AT | 295427 T | 15-05-2005 |
| | | | AT | 318327 T | 15-03-2006 |
| | | | AU | 726501 B2 | 09-11-2000 |
| | | | AU | 3481297 A | 05-01-1998 |
| | | | CA | 2257109 A1 | 11-12-1997 |
| | | | DE | 69733282 D1 | 16-06-2005 |
| | | | DE | 69733282 T2 | 19-01-2006 |
| | | | EP | 0912766 A1 | 06-05-1999 |
| | | | ES | 2243393 T3 | 01-12-2005 |
| | | | JP | 2000509608 T | 02-08-2000 |
| | | | NZ | 333136 A | 27-03-2000 |
| | | | PT | 1179600 T | 31-08-2005 |
| | | | US | 6174670 B1 | 16-01-2001 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0200362 A
- EP 0201184 A
- EP 0512334 A
- EP 0543942 A
- US 6503720 B

- EP 0686699 A
- WO 0530990 A
- EP 1518935 A
- EP 200362 A

**Non-patent literature cited in the description**

- *BioTechniques,* 1997, vol. 22, 130-138
- *BMC Bioinformatics,* 2005, vol. 6, 62

- **D. M. BATES ; D. G. WATTS.** Nonlinear Regression Analysis and its Applications. Wiley, 1988